# EUROPÄISCHE PATENTSCHRIFT

(11) **EP 1 792 175 B1**
(45) Veröffentlichungstag und Bekanntmachung des Hinweises auf die Patenterteilung: **04.11.2009**
(21) Anmeldenummer: 05782449.2
(22) Anmeldetag: 27.08.2005
(51) Int. Cl.: G01N 31/10

(54) **VERFAHREN ZUR ERMITTLUNG VON KENNZAHLEN FÜR KATALYSATOREN**
METHOD FOR DETERMINING CHARACTERISTIC NUMBERS FOR CATALYSTS
PROCEDE POUR DETERMINER DES PARAMETRES DE CATALYSEURS

(30) Priorität: 09.09.2004 DE 102004043547
(43) Veröffentlichungstag der Anmeldung: 06.06.2007
(73) Patentinhaber: Bayer Technology Services GmbH, 51368 Leverkusen (DE)
(72) Erfinder: BOLL, Matthias, 51061 Köln (DE)
(86) Internationale Anmeldenummer: PCT/EP2005/009267
(87) Internationale Veröffentlichungsnummer: WO 2006/027127

(56) Entgegenhaltungen:
- DD-A3- 158 323
- DE-B- 1 205 539
- SU-A1- 431 899
- US-A- 3 214 354
- US-A- 3 407 227

## Beschreibung

Die vorliegende Anmeldung umfasst ein Verfahren zur Ermittlung von Kennzahlen für Katalysatormaterial mittels elektrochemischer Messung, die Verwendung dieses Verfahrens zur Optimierung und Auswahl von Katalysatoren und Verfahren.

Die Testung von Katalysatoren generell, Hydrierkatalysatoren im Besonderen, auf Selektivität, Aktivität und Standzeit ist bisher sehr zeitaufwändig und teuer. Zurzeit werden für diese Testungen Reaktionen in (Einzel- oder Mehrfach-) Reaktoren, oft unter Wasserstoffüberdruck, gefahren, der Wasserstoffverbrauch und/oder die Menge an Reaktionsprodukt und Reaktionsnebenprodukten pro Zeiteinheit oder als Funktion der Zeit ermittelt (zum Beispiel Hoffer et. al., Catal. Today, 2003, 1-7, 2887). Der Aufwand ist sehr groß, da hohe Investitionskosten für entsprechende (Versuchs-) Reaktoren anfallen und eine hohe Qualifikation der Mitarbeiter benötigt wird. Entsprechend der großen Versuchsanordnung wird außerdem viel Probenmaterial benötigt, und es fällt Zeit- und Kostenaufwand für die Analytik (HPLC, GC-MS usw.) jedes einzelnen Messpunktes an.

Aufgrund dieses Aufwandes ermitteln viele Hersteller von Katalysatoren solche, aus einer Reaktion stammenden, Kenngrößen nicht zur Charakterisierung ihres Produktes, sondern es werden physikalisch-chemische Größen ermittelt, die wie die Partikelgrößenverteilung, die chemische Analyse bezüglich der Elemente und eventuell temperaturprogrammierte Oxidation mit darauf folgender Reduktion (TPR/TPO) nur indirekte Aussagen über die katalytischen Eigenschaften ermöglichen.

Aus der Literatur bekannt ist die Verwendung einer elektrochemischen Zelle zur Beobachtung der Vergiftung eines Katalysators durch Schwefelverbindungen, allerdings ohne eine online-Verfolgung einer gleichzeitig laufenden Hydrierreaktion zu erwähnen (L. Horner, C. Franz, Z. Naturforsch. 40b (1985), 814-821). Die Aceton-Hydrierung an speziellen Raney-Nickel-Hydrierkatalysatortypen wurde an anderer Stelle durch elektrochemische Verfolgung untersucht. (J. Pardillos-Guindet, S. Metais, S. Vidal, J. Court, P. Fouilloux, Applied Catalysis A: General 132 (1995) S.61-75). Ein Verfahren, das mit hilfe potentiometrischer Messungen die Endpunkte Katalysierter Hydrierungsreaktionen bestimmt, wird in US 340 227 offenbart.

Es stellt sich damit, ausgehend vom genannten Stand der Technik, die Aufgabe, ein Verfahren bereitzustellen, das möglichst umfangreiche Informationen über zu untersuchende Katalysatoren liefert, dabei einfach und schnell anzuwenden ist und kostengünstig durchgeführt werden kann, und somit zur Qualitätsüberwachung bei der Herstellung und dem Einsatz von Katalysatoren oder auch für das Screening bzw. die vergleichende Untersuchung innerhalb einer Katalysatorbibliothek verwendet werden kann.

Dies ist überraschenderweise mit dem erfindungsgemäßen Verfahren gelungen.

Gegenstand der vorliegenden Erfindung ist daher ein Verfahren zur Ermittlung von Kennzahlen für das Katalyseverhalten von Katalysatormaterial, bevorzugt in Suspension, insbesondere von Hydrierungsreaktionen, durch Bestimmung einer Potentialdifferenz und der zeitlichen Schwankung und/oder Änderung dieser Differenz zwischen einer Messelektrode, die in eine konstant gerührte Reaktionsmischung eintaucht, und einer Referenzelektrode, wobei im Falle einer Hydrierungsreaktion die Reaktionsmischung von Wasserstoff kontinuierlich durchströmt wird.

Die erfindungsgemäße, elektrochemische, bevorzugt auch online erfolgende, Ermittlung von Messgrößen zur schnellen Bestimmung von Kennzahlen für das Katalyseverhalten von Katalysatormaterialien erfordert nur geringen apparativen Aufwand und ist schnell und kostengünstig. Die somit auf überraschend einfache Art und Weise, gleichzeitig und unter Standardbedingungen ermittelten Kennzahlen ermöglichen vergleichende Aussagen über wichtige Qualitätsmerkmale wie Aktivität, Aktivierungsfähigkeit und Standzeit eines Katalysators und können in der Qualitätssicherung bei Herstellung und Einsatz des Katalysators verwendet werden. Zusätzlich kann der Katalyseverlauf in Hinblick auf gewünschte und/oder unerwünschte Nebenreaktionen verfolgt werden. Das Verfahren ist ebenfalls zur schnellen Ermittlung möglicher Katalysatorgifte und der Quantifizierung derer Einflüsse auf die Reaktionsgeschwindigkeit verwendbar. Das Verfahren ist daher für eine Vielzahl von Katalysatoren, z. B. Oxidationskatalysatoren, Polymerisationskatalysatoren, Depolymerisationskatalysatoren und insbesondere Hydrierkatalysatoren geeignet.

Das erfindungsgemäße Verfahren wird zur vergleichenden Qualitätsbestimmung von verschiedenen Katalysatoren, insbesondere Hydrierkatalysatoren, unter jeweils zu wählenden Standardbedingungen eingesetzt. Als Beispiel für erfindungsgemäße Standardbedingungen wird eine Hydrierreaktion bei konstantem Druck in der Reaktionsmischung, bevorzugt Atmosphärendruck, bei Raumtemperatur, also 22°C, und in gepufferter Lösung, insbesondere auf pH 7 gepuffert, mit Dinatriummaleat als zu hydrierendem Edukt durchgeführt, wobei als Lösungsmittel solche verwendet werden können, in denen die zu hydrierenden Edukte, in diesem Falle Maleate, ausreichend löslich sind, hierbei bevorzugt Wasser. Die zu untersuchenden Hydrierkatalysatoren liegen suspendiert in der Reaktionsmischung vor. Für andere Katalysereaktionen und/oder Katalysatorsysteme sind den Reaktionen und Systemen entsprechende Standardbedingungen zu wählen.

Beim erfindungsgemäßen Verfahren zur Ermittlung von Kennzahlen von Katalysatoren wird die durch Eduktzugabe verursachte Potentialdifferenz zwischen der Ableitelektrode in der Reaktionsmischung und einer Referenzelektrode, die ionenleitend mit der Reaktionsmischung verbunden ist, als Funktion der Zeit elektronisch erfasst und damit eine Relaxationszeit gemessen, die die Zeitspanne von der Eduktzugabe bis zum Ende der Reaktion des Eduktes (Eduktverbrauch) umfasst. So wird erfindungsgemäß die Steigung (K2') aus der Auftragung mehrerer Relaxationszeiten gegen die jeweils zugegebene Menge an Edukt mit der Aktivität (z. B. Hydrierfähigkeit) eines Katalysators korreliert und/oder der y-Achsenabschnitt bei "Menge des angebotenen Edukts = 0" (K3') wird mit der Aktivierungsfähigkeit bzw. der Aktivierungszeit des Katalysators korreliert. Die maximal mögliche Menge an zuzugebendem Edukt (K4') kann schließlich beispielsweise als Maß für die Standzeit verwendet werden. Die auf die Katalysatormenge normierten Kennzahlen K1, K2, K3 und K4 (erhalten durch Division der ermittelten Werte K1', K2', K3', K4' durch die eingesetzte Menge an Katalysator) sind innerhalb einer Reaktionsklasse, beispielsweise der Klasse der Hydrierreaktionen bei Standardbedingungen mit zu variierenden Hydrierkatalysatoren, vergleichbar und ermöglichen so eine Bewertung der Katalysatoren in Bezug auf die oben genannten Qualitätsmerkmale. Die Korrelation der Kennzahlen mit den Qualitätsmerkmalen kann, bei proportionalen, antiproportionalen, exponentiellen oder anderen mathematisch beschreibbaren Abhängigkeiten, quantifizierbare ansonsten auch rein qualitative Abhängigkeiten beschreiben.

Bei Hydrierreaktionen wird beispielsweise ein hoher bzw. - bei vergleichender Betrachtung - höherer Wert für K1 und/oder K2 mit einer niedrigen bzw. niedrigeren Aktivität des Katalysators, ein hoher bzw. höherer Wert für K3 mit einer niedrigen bzw. niedrigeren Aktivierungsfähigkeit des Katalysators oder ein hoher bzw. höherer Wert für K3 mit einer langen bzw. längeren Aktivierungszeit des Katalysators und ein hoher bzw. höherer Wert für K4 mit einer langen bzw. längeren Standzeit eines Katalysators angenommen.

Die bei Standardbedingungen ermittelten Qualitätsmerkmale der Katalysatoren ermöglichen es dem Fachmann, Rückschlüsse auf die Eigenschaften der Katalysatoren bei von den Standardbedingungen abweichenden Reaktionsbedingungen zu ziehen.

In einer bevorzugten Ausführung des erfindungsgemäßen Verfahrens wird ein Goldblech als Ableitelektrode in eine gerührte Suspension einer definierten Menge des zu untersuchenden Katalysators getaucht. Anschließend werden unterschiedliche Volumina einer Dinatriummaleatlösung zugegeben. Es wird die Potenzialdifferenz zwischen der Ableitelektrode und einer Referenzelektrode, die ionenleitend mit der Suspension verbunden ist, als Funktion der Zeit elektronisch erfasst. Bei der Zugabe des Dinatriummaleats verändert sich die Potenzialdiffemez charakteristisch, und es wird die Zeit - Relaxationszeit (K1') - ermittelt, die verstreicht, bis das Potenzial wieder auf einem zeitlich konstanten Wert nahe des Ausgangswertes liegt und damit das Ende der Hydrierreaktion anzeigt. Durch die Zugabe unterschiedlicher Volumina an Dinatriummaleatlösung werden unterschiedliche Zeiten ermittelt, die in einem linearen Zusammenhang, als Funktion der Zugabe, mit dem Dinatriummaleatlösungsvolumen (Dinatriummaleatlösung mit jeweils gleicher Konzentration vorausgesetzt) stehen. Graphisch oder mathematisch, beispielsweise durch eine lineare Regression, lassen sich aus diesen Ergebnissen die Steigung und der Y-Achsenabschnitt der Geraden ermitteln, die die Werte K2' und K3' zugänglich machen. Die Summe der zugesetzten Dinatriummaleatlösungsvolumina vor dem Einsetzen eines starken Rauschens der gemessenen Potenzialdifferenz (Desaktivieren des Katalysators) entspricht der Kennzahl K4'. K1', K2', K3' und K4' werden dann auf die Menge an bei der Untersuchung eingesetztem Katalysator normiert.

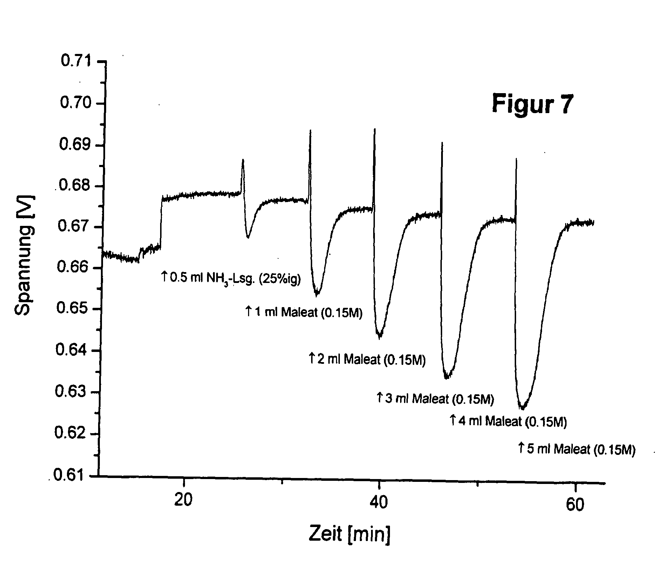

Dieses Verfahren lässt sich auch dazu nutzen, den Einfluss von Fremdverbindungen, speziell von "Katalysatorgiften", auf das Hydrierverhalten zu untersuchen. Katalysatorgifte werden in der Technik eingesetzt, um bestimmte Nebenreaktionen zurückzudrängen, die der Katalysator unter bestimmten Reaktionsbedingungen durchführt, zum Beispiel die nicht gewünschte Hydrierung des Aromaten. Mit dem erfindungsgemäßen Verfahren lassen sich schnell und kostengünstig unterschiedliche Katalysatorgifte in ihrer Wirksamkeit auf den Katalysator und dem daraus möglicherweise resultierenden Einfluss auf die gewünschte Reaktion untersuchen. Die Differenz der Werte K1(unvergiftet) und K1(vergiftet) für einen bestimmten Katalysator, jeweils ermittelt nach dem weiter oben und für Fig. 7 detailliert beschriebenen Verfahren, wird in Abhängigkeit mehrerer Katalysatorgifte bestimmt, und es wird hieraus eine Wirksamkeitsrangliste der Katalysatorgifte für einzelne Katalysatortypen ermittelt. Daraus ergibt sich eine Handlungsanweisung für den bevorzugten Einsatz der Katalysatorgifte je nach Anwendungsgebiet.

Bevorzugt ist ein Verfahren zur Bestimmung der oben genannten Messgrößen, dass als erste Messgröße der Potentialdifferenz die gemessene Absolutspannung oder einen beliebigen Zeitmittelwert der Spannung, bevorzugt von mindestens 1 Sekunde, besonders bevorzugt von mindestens 2 min, ganz besonders bevorzugt von mindestens 5 min, vor Zugabe reaktionsfähigen Eduktes gegenüber dem Potentialminimum nach Zugabe reaktionsfähigen Eduktes in die Mischung sowie als zweite Messgröße die Zeitdifferenz (Relaxationszeit) zwischen dem Eduktzugabezeitpunkt und dem Zeitpunkt des Wiedererreichens einer annähernd konstanten Absolutspannung nach Eduktzugabe (Ende der Reaktion) verwendet.

Bevorzugt ist ein Verfahren, bei dem der pH-Wert der Reaktionsmischung während der Messung konstant gehalten wird, insbesondere durch Einsatz einer Pufferlösung.

In einem besonders bevorzugten Verfahren wird der Druck in der Reaktionsmischung konstant gehalten, bevorzugt auf Atmosphärendruck, ebenso wie die Temperatur, bevorzugt auf Raumtemperatur. Dieses führt auch zur Verringerung von Messschwankungen.

In einem bevorzugten Verfahren liegt der Katalysator fest in einer kondensierten oder gasförmigen Phase, bevorzugt in einer flüssigen Phase, vor und steht entweder in einer gerührten Suspension durch zufällige Stöße an die Ableitelektrode in zeitlich begrenztem Kontakt mit der Ableitelektrode, und/oder er wird fest mit der Ableitelektrode verbunden, und/oder die Ableitelektrode selber ist aus dem zu untersuchenden Katalysatormaterial gefertigt.

Als Katalysatoren, die diesem Verfahren zugeführt werden, werden Metallkatalysatoren rein, dotiert oder in Legierungen und/oder Mischungen, bevorzugt Edel- und Halbedelmetallkatalysatoren, dabei besonders bevorzugt Palladium, Platin oder Ruthenium, Rhodium, Iridium, oder Übergangsmetallkatalysatoren, bevorzugt Eisen, Cobalt, Chrom, Nickel oder Kupfer, besonders bevorzugt Raney-Nickel oder Raney-Kupfer, verwendet. Die Metallkatalysatoren werden entweder geträgert auf Kohle oder Siliziumoxid oder auf Metall, wobei das Trägermetall gleich oder ungleich dem Katalysatormetall sein kann, besonders bevorzugt auf Aktivkohleträgern oder aber ungeträgert eingesetzt.

Bevorzugt ist ein Verfahren, bei dem als Edukt eine wasserlöslich organische Verbindung mit mindestens einer Doppelbindung, bevorzugt ungesättigte Disäuren mit Kohlenstoffketten C₂-C₈ und/oder deren Salze, besonders bevorzugt Maleinsäure und/oder deren Dinatriumsalz, verwendet wird.

Das generelle Verfahren, elektrochemische Potentiale an z.B. Goldableitelektroden oder an Ableitelektroden aus anderen geeigneten Materialien zu messen, ist allgemein bekannt und wird angewendet (vgl. z.B. J. Pardillos-Guindet, J. of Catalysis 155, (1995), S. 12-20 oder U. Kürschner et al, Catalysis Letters 34, (1995), Seite 191-199).

Die Referenzelektrode wird gewöhnlich elektrisch-leitend mit der Reaktorlösung verbunden, in diesem Fall ionen-leitend über eine Salzbrücke mit Fritte, und befindet sich entweder innerhalb oder außerhalb des Reaktors, besonders bevorzugt außerhalb des Reaktors. Die Referenzelektrode soll damit von der Reaktionstemperatur und anderen Einflüssen, zum Beispiel Konzentrationsänderungen im Reaktor, unabhängig sein und so ein zeitlich konstantes Potential liefern. Bevorzugt wird als Referenzelektrode eine Elektrode zweiter Art, d.h. eine Halbzelle mit definiertem und konstantem Gleichgewichtspotential wie zum Beispiel eine Kalomel- oder eine Silber-Silberchloridelektrode (Argental-Elektrode), besonders bevorzugt eine Kalomel-Elektrode, eingesetzt.

Als Messelektrode eignen sich Elektroden aus gegenüber den Reaktanden inertem Metall oder einer chemisch inerten Legierung oder Mischung von Metallen, z.B. Edelstahl oder ein Edelmetall wie Gold, Silber oder Platinmetalle, da an diesen Materialien keine bekannten weiteren chemischen Prozesse ablaufen, die das Potential beeinflussen könnten. Die Messelektrode besteht daher bevorzugt aus einem chemischen inerten Metall oder einer chemisch inerten Legierung oder Mischung von Metallen, insbesondere aus Edelstahl, Gold, Silber, Kupfer oder Platinmetallen, wie Platin, Palladium, Rhodium, Ruthenium, Osmium oder Iridium, im Falle einer Hydrierreaktion besonders bevorzugt aus Gold, bevorzugt ausgebildet als Blech, Draht, Filz, Schwamm oder Gitter.

Das erfindungsgemäße Verfahren eignet sich insbesondere auch zum Einsatz in der Hochdurchsatzchemie, besonders in der Materialprüfung oder Katalysatorentwicklung.

Das erfindungsgemäße Verfahren wird daher auch besonders bevorzugt zur online-Ermittlung von Kennzahlen zum Beispiel durch Einsatz eines Pipettierroboters zur Eduktzugabe, automatischen Datenaufnahme durch ein Spannungsmessinstrument, Datenübergabe an einen PC und Ermittlung der oben beschriebenen Kennzahlen durch automatisierte Auswertung über Software und/oder im parallelisierten Betrieb eingesetzt.

Weiterhin eignet sich das erfindungsgemäße Verfahren vorzüglich zur Herstellung von Produkten, insbesondere in der chemisch-pharmazeutischen Industrie, nach Verfahren, in welchen Katalysatoren eingesetzt werden, wobei der verwendete Katalysator anhand von nach dem erfindungsgemäßen Verfahren ermittelten Kennzahlen ausgewählt oder optimiert wurde.

Darüber hinaus kann man das erfindungsgemäße Verfahren auch in Verfahren zur Herstellung von Katalysatoren einsetzen, um diese Verfahren und deren Produkte zu optimieren.

Schließlich kann das erfindungsgemäße Verfahren auch zur Auswahl eines für einen bestimmten Zweck geeigneten Katalysators aus einer endlichen Anzahl zu Verfügung stehender Katalysatoren eingesetzt werden.

Diese Verfahren und ihre Produkte sind ebenfalls Gegenstand der vorliegenden Anmeldung.

Die Erfindung wird nachstehend anhand der Figuren beispielhaft näher erläutert ohne sie jedoch auf diese zu beschränken.

Es zeigen:
- Fig. 1: ein Spannungs-/Zeitdiagramm für die Zugabe von Edukt zu einer Suspension von Kataly- sator A. Beispielhaft eingezeichnet ist eine Potentialdifferenz 1) für die Zugabe von 8 ml Edukt und die Relaxationszeit k) für die Zugabe von 7 ml Edukt
- Fig. 2: aus Fig. 1 ermittelte Relaxationszeiten mehrerer Eduktzugaben als Funktion der Edukt- menge mit linearer Regression. Eingezeichnet sind a) Kennzahl K1': Relaxationszeit bei definierter Eduktzugabemenge (z. B. Datenpunkt (4ml/192s), b) Kennzahl K2': Steigung der Regressionsgeraden, c) Kennzahl K3': y-Achsenabschnitt (Volumen des angebotenen Edukts=0) der Regressionsgraden als Kennzahlen für die Aktivität (K1', K2') bzw. Aktivierungsfähigkeit (K3') des Katalysators A
- Tab. 1: Tabelle mit den Messwerten aus dem in Fig. 2 dargestellten Spannungs-/Zeitdiagramm
- Fig. 3: ein Spannungs-/Zeitdiagramm für die Zugabe von Edukt zu einer Suspension von Katalysator B
- Fig. 4: aus Fig. 3 ermittelte Relaxationszeiten mehrerer Eduktzugaben als Funktion der Edukt- menge mit linearer Regression. Kennzahl K2': Steigung der Regressionsgeraden als Kenn- zahl der Aktivität für den Katalysator B
- Tab. 2: Tabelle mit den Messwerten aus dem in Fig. 4 dargestellten Spannungs-/Zeitdiagramm
- Fig. 5: ein Spannungs-/Zeitdiagramm für die Zugabe von Edukt zu einer Suspension von Katalysator C
- Fig. 6: aus Fig. 5 ermittelte Relaxationszeiten mehrerer Eduktzugaben als Funktion der Edukt- menge mit linearer Regression. Kennzahl K2': Steigung der Regressionsgeraden als Kenn- zahl für den Katalysator C
- Tab. 3: Tabelle mit den Messwerten aus dem in Fig. 6 dargestellten Spannungs-/Zeitdiagramm
- Fig. 7: ein Spannungs-/Zeitdiagramm für die Zugabe von Edukt zu einer Suspension von Kataly- sator C nach einer Vergiftung mit Spuren von Ammoniak, die zu einer Verringerung der Reaktionsgeschwindigkeit führen soll
- Fig. 8: aus Fig. 7 ermittelte Relaxationszeiten mehrerer Eduktzugaben als Funktion der Edukt- menge mit linearer Regression. Kennzahl K2': Steigung der Regressionsgeraden als Kenn- zahl für den Katalysator C nach Ammoniakvergiftung
- Tab. 4: Tabelle mit den Messwerten aus dem in Fig. 8 dargestellten Spannungs-/Zeitdiagramm
- Tab. 5: Tabelle mit den ermittelten normierten Kennzahlen K1, K2 und K3 der Katalysatoren B, C, und C vergiftet
- Fig. 9:: Verhalten des Katalysators D bei Überschreitung der maximalen Standzeit. Kennzahl K4': Summe der ml Eduktzugabe einer definierten Konzentration bis zum signifikanten Signal- Rausch-Verhältnis-Anstieg für Katalysator D
- Fig. 10: Verhalten des Katalysators E bei Überschreitung der maximalen Standzeit. Kennzahl K4': Summe der ml Eduktzugabe bis zum signifikanten S/N-Anstieg für Katalysator E
- Tab. 6: Tabelle mit den ermittelten normierten Kennzahlen K4 der Katalysatoren D und E

**Tabelle 1**

| Maleatzugabe [ml] | Relaxationszeit [s] |
|---|---|
| 1 | 97 |
| 2 | 138 |
| 3 | 180 |
| 4 | 192 |
| 5 | 222 |
| 6 | 270 |
| 7 | 282 |
| 8 | 348 |
| 10 | 384 |

**Tabelle 2**

| Maleatzugabe [ml] | Relaxationszeit [s] |
|---|---|
| 1 | 96 |
| 1,5 | 120 |
| 2 | 150 |
| 2,5 | 164 |
| 3 | 180 |
| 3,5 | 196 |
| 4 | 264 |
| 4,5 | 288 |
| 5 | 348 |
| 8 | 492 |

**Tabelle 3**

| Maleatzugabe [ml] | Relaxationszeit [s] |
|---|---|
| 1 | 97 |
| 2 | 138 |
| 3 | 180 |
| 4 | 192 |
| 5 | 222 |
| 6 | 270 |
| 7 | 282 |
| 8 | 348 |
| 10 | 384 |

**Tabelle 4**

| Maleatzugabe [ml] | Relaxationszeit [s] |
|---|---|
| 1 | 158 |
| 2 | 234 |
| 3 | 294 |
| 4 | 307 |
| 5 | 338 |

**Tabelle 5**

| Katalysator | Kennzahl K1 (s*(4 ml)⁻¹*g⁻¹) | Kennzahl K2 [s*ml⁻¹*g⁻¹] | Kennzahl K3 [s*g⁻¹] |
|---|---|---|---|
| B | 311 | 68 | 28±14 |
| C | 168 | 28 | 62±7 |
| C (vergiftet) | 269 | 38 | 119±22 |

**Tabelle 6:**

| Katalysator | Kennzahl K4 [ml*g⁻¹] |
|---|---|
| D | 10 |
| E | 17 |

### Beispiele

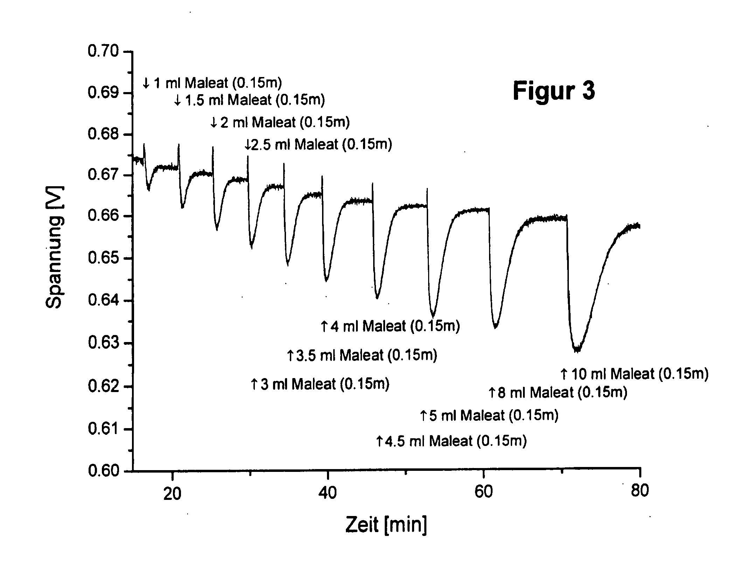

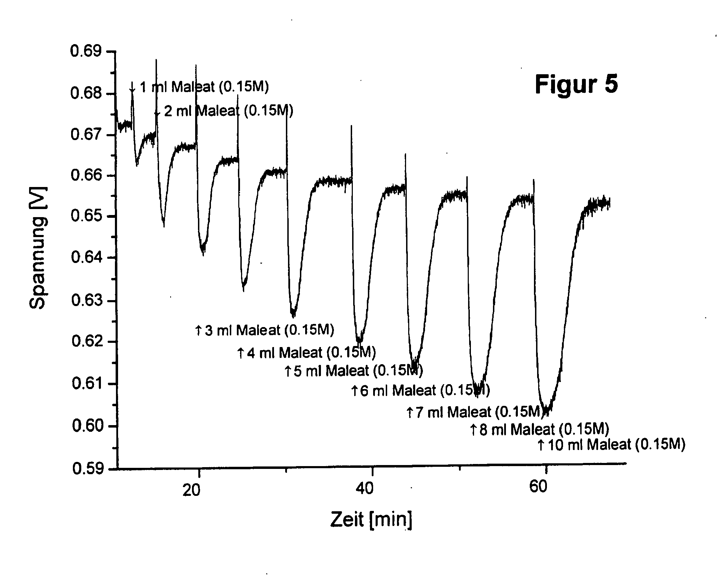

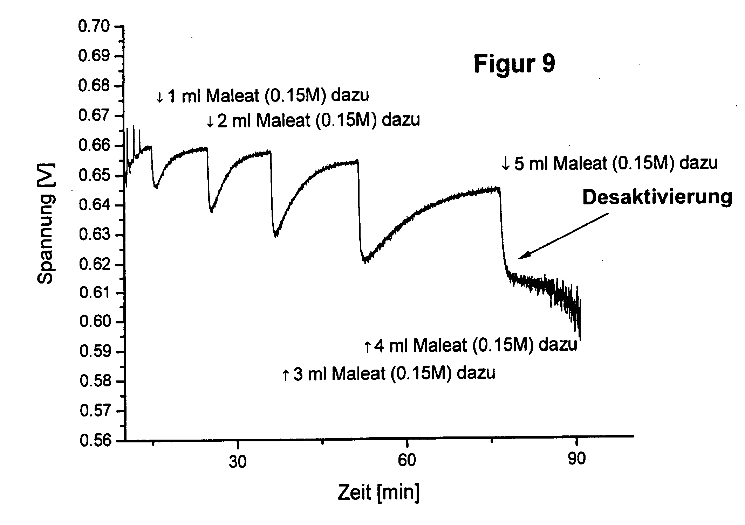

Es wurde bei standardisierten Bedingungen die Potentialdifferenz zwischen der in eine Pufferlösung (pH = 7) eintauchenden Goldblechelektrode (Ableitelektrode) und einer mit der Lösung über eine Salzbrücke ionen-leitenden verbundenen Kalomelektrode (Referenzelektrode) bei Raumtemperatur, d.h. 22°C, und Atmosphärendruck gemessen.

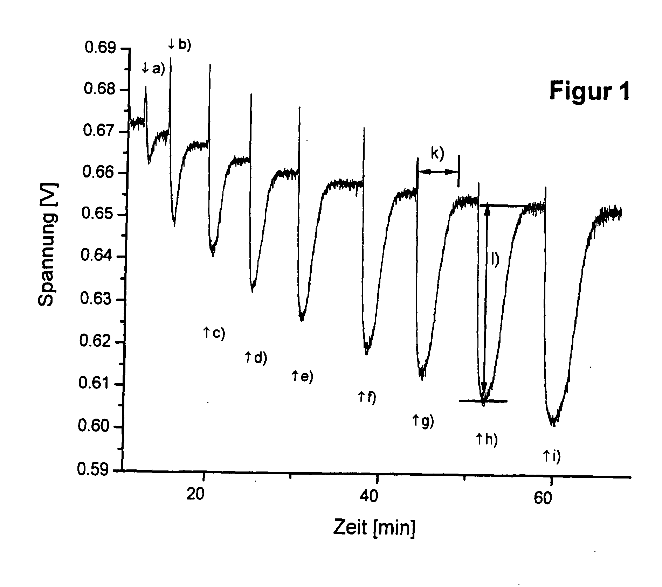

- Fig. 1: zeigt in einem Spannungs-/Zeitdiagramm die zeitliche Entwicklung der Potenzialdifferenz zwischen der Referenzelektrode und der mit der Ableitelektrode in Kontakt stehenden frischen Raney-Nickel-Katalysatorsuspension bei nachfolgender Zugabe einer 0,15 molaren Dinatriummaleatlösung zu einer Pufferlösung von 0,3 normaler K₂HPO₄/NaH₂PO₄-Pufferlösung. Die Lösung wurde bei 400 U/min des Rührers gerührt und Wasserstoff wurde mit einem Volumenstrom von 10 ml/min über eine Glasfritte durch die Lösung geleitet. In Fig. 1 sind die Zeitpunkte a) bis i) markiert, an denen jeweils Dinatriummaleatlösung zugegeben wurde, wobei das Volumen von Zugabe zu Zugabe um 1 ml gesteigert wird (bei i) um 2 ml). Bei Zugabe der Dinatriummaleatlösung wird ein Abfallen der Absolutspannung auf ein charakteristisches Minimum und ein langsames Wiederansteigen der Spannung auf ein charakteristisches neues Spannungsniveau, das in der Regel nahe der Ausgangsspannung ist, beobachtet. Beispielhaft eingezeichnet sind eine Potentialdifferenz 1) für die Zugabe von 8 ml und die Relaxationszeit k) für die Zugabe von 7 ml Dinatriummaleatlösung.

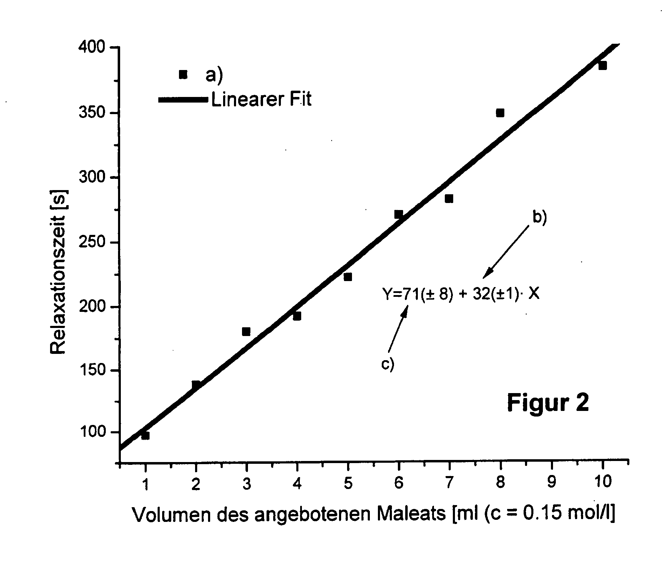

- In Fig. 2: sind gemessene Relaxationszeiten mehrerer Eduktzugaben als Funktion der Eduktmenge des für Fig. 1 beschriebenen Versuchs mit linearer Regression aufgetragen. Eingezeichnet sind a) Kennzahl K1': die Relaxationszeit bei definierter Eduktzugabemenge von hier 4 ml, b) Kennzahl K2': Steigung der Regressionsgeraden, c) Kennzahl K3': y-Achsen- abschnitt (zugegebene Eduktmenge=0) der Regressionsgraden. Weil bei der Ermittlung der Relaxationszeit (K1') gewisse Ablesefehler entstehen können, empfiehlt es sich, nach Normierung (Dividieren) des erhaltenen Wertes K2' durch die eingesetzte Katalysator- menge den Wert K2 als Wert zum Vergleichen der Katalysatoraktivitäten zu verwenden.
- Tab. 1: listet die Messwerte aus dem in Fig. 2 dargestellten Spannungs-/Zeitdiagramm
- Fig. 3: zeigt in einem Spannungs-/Zeitdiagramm die zeitliche Entwicklung der Potenzialdifferenz zwischen der Referenzelektrode und der Ableitelektrode, die Bedingungen sind gewählt wie für Fig. 1 beschrieben. Untersucht wird ein Raney-Nickel-Katalysator Typ B, Dina- triummaleatzugabe und Auswertung erfolgen wie für Fig. 1 beschrieben.

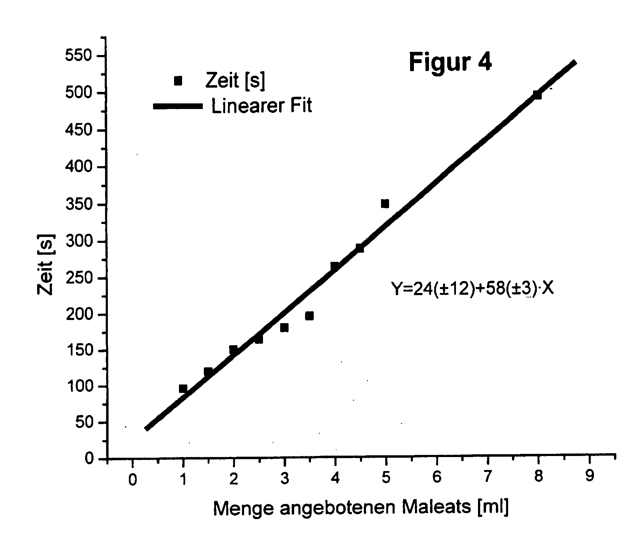

- In Fig. 4: sind gemessene Relaxationszeiten mehrerer Eduktzugaben als Funktion der Eduktmenge des für Fig. 3 beschriebenen Versuchs mit linearer Regression aufgetragen.
- Tab. 2: listet die Messwerte aus dem in Fig. 4 dargestellten Spannungs-/Zeitdiagramm
- Fig. 5: zeigt in einem Spannungs-/Zeitdiagramm die zeitliche Entwicklung der Potenzialdifferenz zwischen der Referenzelektrode und der Ableitelektrode, die Bedingungen sind gewählt wie für Fig. 1 beschrieben. Untersucht wird ein Raney-Nickel-Katalysator Typ C, Dinatriummaleatzugabe und Auswertung erfolgen wie für Fig. 1 beschrieben.

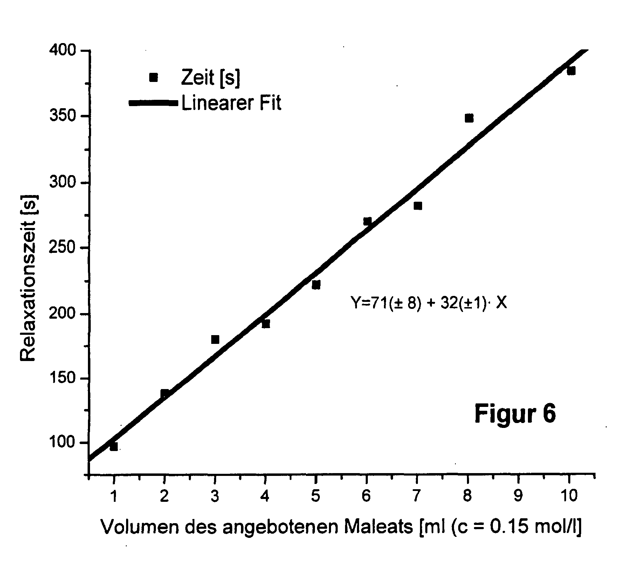

- In Fig. 6: sind gemessene Relaxationszeiten mehrerer Eduktzugaben als Funktion der Eduktmenge des für Fig. 5 beschriebenen Versuchs mit linearer Regression aufgetragen.
- Tab. 3: listet die Messwerte aus dem in Fig. 6 dargestellten Spannungs-/Zeitdiagramm
- Fig. 7: zeigt in einem Spannungs-/Zeitdiagramm die zeitliche Entwicklung der Potenzialdifferenz zwischen der Referenzelektrode und der Ableitelektrode, die Bedingungen sind gewählt wie für Fig. 1 beschrieben. Raney-Nickel-Katalysator C nach einer Vergiftung mit Spuren von Ammoniak (durch Zugabe von 0,5 ml einer 25 gew.-%igen Lösung Ammoniak in Wasser), die zu einer Verringerung der Reaktionsgeschwindigkeit führen soll, Dinatrium- maleatzugabe und Auswertung erfolgen wie für Fig. 1 beschrieben.

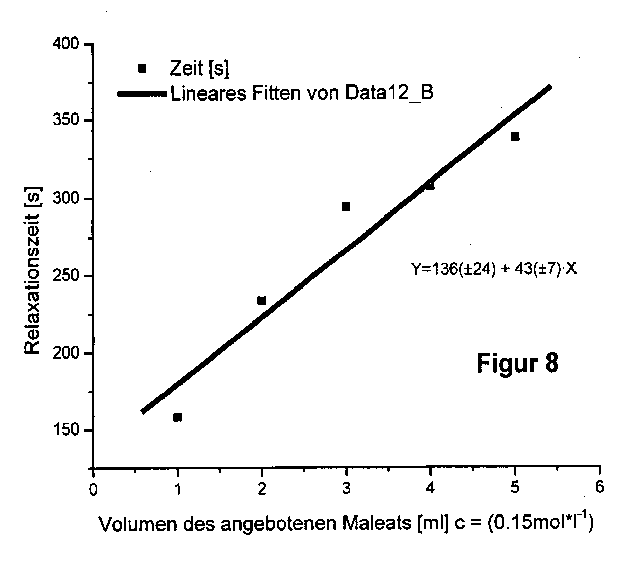

- In Fig. 8: sind gemessene Relaxationszeiten mehrerer Eduktzugaben als Funktion der Eduktmenge des für Fig. 7 beschriebenen Versuchs mit linearer Regression aufgetragen
- Tab. 4: listet die Messwerte aus dem in Fig. 8 dargestellten Spannungs-/Zeitdiagramm
- Tab. 5: zeigt die für die Katalysatoren B, C und C vergiftet ermittelten und normierten Kennzahlen K1, K2 und K3. C im Vergleich zu B weist eine höhere Aktivität bei Raumtemperatur und unter Atmosphärendruck und auch sonst vergleichbaren Bedingungen auf. C im Vergleich zu C vergiftet zeigt ebenfalls eine höhere Aktivität. Je größer der Wert K2, desto geringer ist die Aktivität des Katalysators. Die gleiche Abhängigkeit gilt für die Kennzahl K1. K3 ist ein von der Eduktzugabe unabhängiger Wert, der eine vergleichende Aussage über eine Aktivierungsfähigkeit bzw. Aktivierungszeit des Katalysators zulässt. Je größer dieser Wert, desto länger benötigt der Katalysator für eine Aktivierung
- Fig. 9: zeigt in einem Spannungs-/Zeitdiagramm die zeitliche Entwicklung der Potenzialdifferenz zwischen der Referenzelektrode und der Ableitelektrode, die Bedingungen sind gewählt wie für Fig. 1 beschrieben. Bei Zugabe von mehr als insgesamt 10 ml Dinatrium- maleatlösung wird das Verhalten des Katalysators D bei Überschreitung der maximalen Standzeit beobachtet. Das Signal-zu-Rausch-Verhältnis steigt sprunghaft an, und die Potenzialdifferenz erreicht nicht mehr den ursprünglichen Wert, der Katalysator ist des- aktiviert. Kennzahl K4': Maximal zuzugebende Menge an Edukt auf definierte Katalysatormenge vor dem signifikanten Ansteigen des Signal-zu-Rausch-Verhältnisses

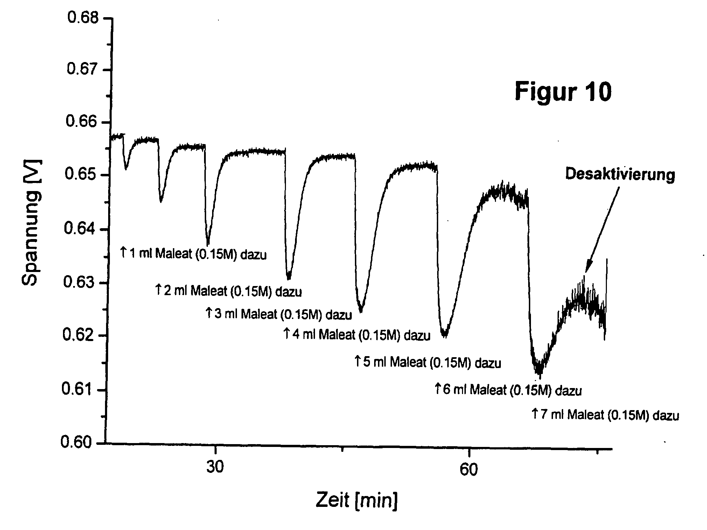

- Fig. 10: zeigt die Potenzialdifferenz zwischen der Referenzelektrode und der Ableitelektrode, die Bedingungen sind gewählt wie für Fig. 1 beschrieben. Bei Zugabe von mehr als insgesamt 21 ml Dinatriummaleatlösung wird das Verhalten des Katalysators E bei Überschreitung der maximalen Standzeit beobachtet. Das Verhalten des Katalysators E ist anders als das des Katalysators D in Fig. 9, aber auch dieser wird desaktiviert. Kennzahl K4': Maximal zuzugebende Menge an Edukt auf definierte Katalysatormenge vor dem signifikanten Ansteigen des Signal-zu-Rausch-Verhältnisses
- Tab. 6: zeigt die für die Katalysatoren D und E ermittelten und normierten Kennzahlen K4. Der Katalysator, der eine größere Menge an Edukt hydrieren kann, ohne dass das Signal-zu- Rausch-Verhältnis signifikant ansteigt (hier Katalysator E), besitzt die höhere Standzeit.

## Patentansprüche

1. Verfahren zur Ermittlung von Kennzahlen für in einer Reaktionsmischung suspendiertes Katalysatormaterial durch zeitliche Erfassung einer Potentialdifferenz zwischen einer Ableitelektrode in der Reaktionsmischung und einer Referenzelektrode, **dadurch gekennzeichnet, dass** für verschiedene Eduktmengen die Zeitdifferenzen (K1') zwischen dem Zeitpunkt einer Eduktzugabe und dem Zeitpunkt des Wiedererreichens einer annähernd konstanten Absolutspannung als Funktion der Eduktmengen gemessen werden, aus denen mittels linearer Regression mindestens eine der folgenden Kennzahlen ermittelt wird: Geradensteigung (K2), Ordinatenabschnitt (K3').

2. Verfahren gemäß Anspruch 1, **dadurch gekennzeichnet, dass** aus den Kennzahlen (K2') und (K3') die auf die eingesetzte Katalysatormenge normierten Kennzahlen (K2) und (K3) ermittelt werden.

3. Verfahren gemäß Anspruch 1, **dadurch gekennzeichnet, dass** die maximal mögliche Menge an zuzugebendem Edukt (K4') normiert auf die eingesetzte Katalysatormenge als Kennzahl (K4) ermittelt wird, wobei sich die maximal mögliche Menge an zuzugebendem Edukt in einem Anstieg des Signal-Rausch-Verhältnisses der zeitlich erfassten Potenzialdifferenz äußert.

4. Verfahren gemäß Anspruch 2, **dadurch gekennzeichnet, dass** der ermittelten Kennzahl (K2) das Qualitätsmerkmal Aktivität und der ermittelten Kennzahl (K3) das Qualitätsmerkmal Aktivierungsfähigkeit bzw. Aktivierungszeit zugeordnet wird.

5. Verfahren gemäß Anspruch 3, **dadurch gekennzeichnet, dass** der ermittelten Kennzahl (K4) das Qualitätsmerkmal Standzeit zugeordnet wird.

6. Verfahren gemäß einem der Ansprüche 1 bis 5, **dadurch gekennzeichnet, dass** als Katalysatormaterial Metallkatalysatoren rein, dotiert, in Legierungen und/oder in Mischungen geträgert oder ungeträgert verwendet werden.

7. Verfahren gemäß einem der Ansprüche 1 bis 6, **dadurch gekennzeichnet, dass** es sich bei der Reaktion um eine Hydrierreaktion handelt.

8. Verfahren gemäß einem der Ansprüche 1 bis 7, **dadurch gekennzeichnet, dass** die Ermittlung der Kennzahlen online und/oder automatisiert und/oder parallelisiert erfolgt.

## Claims

1. Method of determining characteristic numbers for catalyst material suspended in a reaction mixture by measuring a potential difference between a power output electrode in the reaction mixture and a reference electrode as a function of time, **characterized in that** the time differences (K1') between the time at which a starting material is added and the time at which an approximately constant absolute potential is regained are measured as a function of the amounts of starting material for various amounts of starting material and at least one of the following characteristic numbers: line gradient (K2'), ordinate intercept (K3') is determined from these time differences by means of linear regression.

2. Method according to Claim 1, **characterized in that** characteristic numbers (K2) and (K3) normalized relative to the amount of catalyst used are determined from the characteristic numbers (K2') and (K3').

3. Method according to Claim 1, **characterized in that** the maximum possible amount of starting material (K4') to be added normalized relative to the amount of catalyst used is determined as characteristic number (K4), with the maximum possible amount of starting material to be added being indicated by an increase in the signal to noise ratio of the potential difference measured as a function of time.

4. Method according to Claim 2, **characterized in that** the quality feature activity is assigned to the characteristic number (K2) determined and the quality feature activatability or activation time is assigned to the characteristic number (K3) determined.

5. Method according to Claim 3, **characterized in that** the quality feature operating life is assigned to the characteristic number (K4) determined.

6. Method according to any of Claims 1 to 5, **characterized in that** metal catalysts either in pure form, doped form, in alloys and/or in mixtures, either supported or unsupported, are used as catalyst material.

7. Method according to any of Claims 1 to 6, **characterized in that** the reaction is a hydrogenation reaction.

8. Method according to any of Claims 1 to 7, **characterized in that** the determination of the characteristic numbers is carried out on-line and/or automatically and/or parallelized.

## Revendications

1. Procédé pour la détermination de constantes pour un matériau de catalyseur mis en suspension dans un mélange réactionnel par enregistrement au cours du temps d'une différence de potentiel entre une électrode de dérivation dans le mélange réactionnel et une électrode de référence, **caractérisé en ce que** l'on mesure pour différentes quantités d'éduit les différences de temps (K1') entre le moment d'une addition d'éduit et le moment où l'on atteint à nouveau une tension absolue presque constante en fonction des quantités d'éduit, à partir desquelles on détermine au moyen d'une régression linéaire au moins une des constantes suivantes : pente de la droite (K2'), ordonnée à l'origine (K3').

2. Procédé selon la revendication 1, **caractérisé en ce que** l'on détermine à partir des constantes (K2') et (K3'), les constantes (K2) et (K3) normées par rapports aux quantités de catalyseur utilisées.

3. Procédé selon la revendication 1, **caractérisé en ce que** l'on détermine la quantité maximale possible d'éduit à ajouter (K4') normée par rapport à la quantité de catalyseur utilisée comme constante (K4), la quantité maximale possible d'éduit à ajouter s'exprimant par une augmentation du rapport signal/bruit de la différence de potentiel enregistrée au cours du temps.

4. Procédé selon la revendication 2, **caractérisé en ce que** la constante (K2) déterminée est associée à l'indice de qualité activité et la constante déterminée (K3) à l'indice de qualité aptitude d'activation respectivement durée d'activation.

5. Procédé selon la revendication 3, **caractérisé en ce que** la constante déterminée (K4) est associée à l'indice de qualité temps de séjour.

6. Procédé selon l'une quelconque des revendications 1 à 5, **caractérisé en ce que** l'on utilise comme matériau de catalyseur des catalyseurs métalliques purs, dopés, en alliages et/ou en mélanges sur supports ou sans supports.

7. Procédé selon l'une quelconque des revendications 1 à 6, **caractérisé en ce qu'**il s'agit pour la réaction d'une réaction d'hydrogénation.

8. Procédé selon l'une quelconque des revendications 1 à 7, **caractérisé en ce** la détermination des constantes est réalisée online et/ou de manière automatisée et/ou en parallèle.
